Europäisches Patentamt

European Patent Office

Office européen des brevets

(19)

(11) EP 1 530 334 A2

(12) EUROPEAN PATENT APPLICATION

(43) Date of publication:
11.05.2005 Bulletin 2005/19

(51) Int Cl.⁷: H04L 27/227

(21) Application number: 04026333.7

(22) Date of filing: 05.11.2004

(84) Designated Contracting States:
AT BE BG CH CY CZ DE DK EE ES FI FR GB GR
HU IE IS IT LI LU MC NL PL PT RO SE SI SK TR
Designated Extension States:
AL HR LT LV MK YU

(30) Priority: 06.11.2003 KR 2003078379

(71) Applicant: Samsung Electronics Co., Ltd.
Suwon-si, Gyeonggi-do (KR)

(72) Inventors:
• Ahn, Won-Ick c/o Samsung Electronics Co., Ltd.
Suwon-si Gyeonggi-do (KR)

• Lim, Chae-Man
c/o Samsung Electronics Co., Ltd.
Suwon-si Gyeonggi-do (KR)
• Lim, Young-Seok
c/o Samsung Electronics Co., Ltd.
Suwon-si Gyeonggi-do (KR)

(74) Representative: Grünecker, Kinkeldey,
Stockmair & Schwanhäusser Anwaltssozietät
Maximilianstrasse 58
80538 München (DE)

(54) **Frequency error detector and combiner in a receiver of a mobile communication system**

(57)    A frequency error detector and combiner for use in a mobile communication system. The frequency error detector and combiner for use in a receiver of a mobile communication system which includes different frame formats according to slot formats, the receiver having at least two fingers including a frequency error detector for detecting a frequency error using a phase reference symbol of a predetermined channel received from a transmitter and a reference frequency error generator for generating a reference frequency error at predetermined reference time intervals using the detected frequency error; a level controller for controlling the gain of a frequency error generated from the reference frequency error generator; and a frequency error combiner for combining the gain controlled frequency error generated from each finger with a predetermined value.

FIG.5

EP 1 530 334 A2

## Description

The present invention relates to a frequency error detector and a frequency error combiner for use in a mobile communication system. The present invention further relates to a corresponding frequency error detection and frequency error combining method.

Typically, mobile communication systems are classified into either a synchronous mobile communication system or an asynchronous mobile communication system. The asynchronous mobile communication system has been adopted in Europe, and the synchronous mobile communication system has been adopted in the United States. The mobile communication system for use in Europe is referred to as a UMTS (Universal Mobile Telecommunication System), and a mobile communication terminal for use in the UMTS is generally referred to as a UE (User Equipment).

Frequency offset that occurs in a mobile communication system causes unavoidable performance deterioration. A particular frequency offset problem occurs when a carrier frequency gradually changes with temperature. An AFC (Automatic Frequency Control) operation for compensating for the frequency offset is needed. The UMTS uses a common pilot channel signal (hereinafter referred to as a CPICH) as a reference signal of a frequency error control loop.

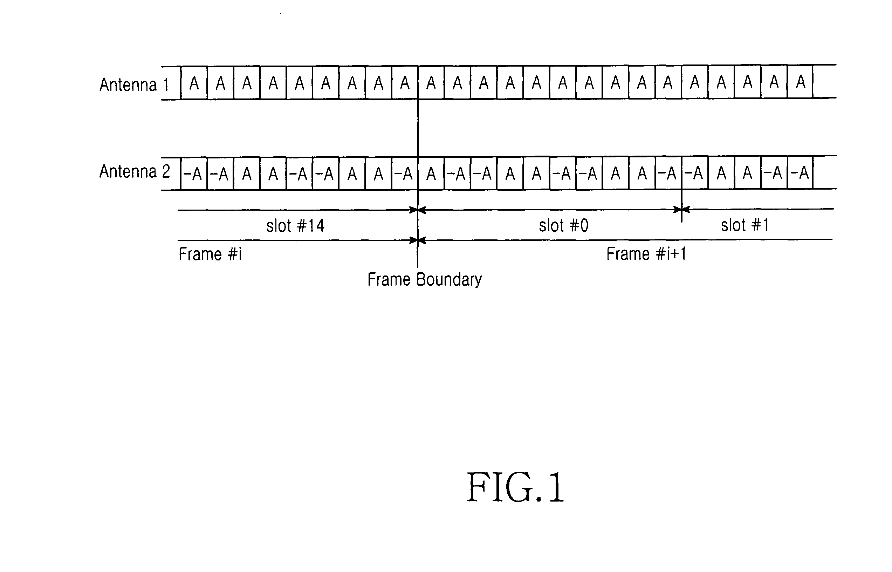

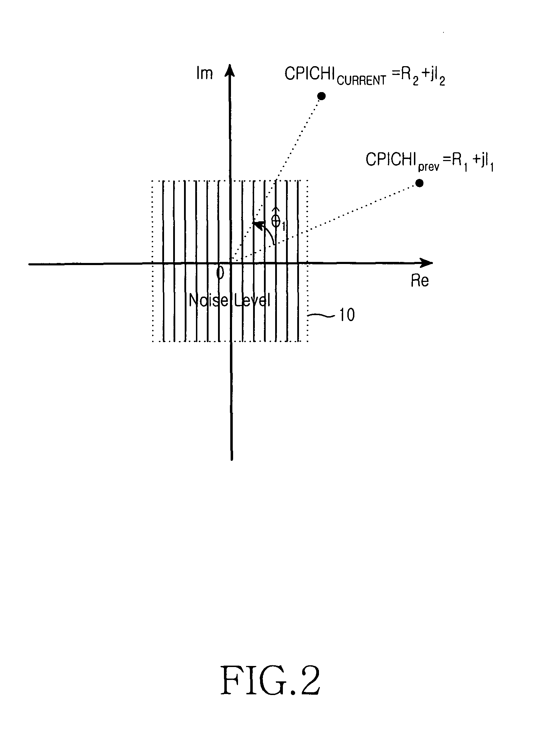

Fig. 1 is a diagram illustrating a modulation pattern of the common pilot channel (CPICH). An average phase of the CPICH is calculated during a prescribed time period. The selection of the time period is irrespective of a transfer rate of a traffic channel. The phase variation can be calculated from continuous CPICH signals, since the CPICH is transmitted in non-modulated signals. Coordinates of a current reception symbol can be calculated by performing an I&D (Integrate & Dump)-process on the reception signal during a predetermined period. A phase variation of the current reception symbol is calculated based on these coordinates and the coordinates of a previous reception symbol. Such a calculated value acts as a linear estimation value of the low phase variation. Also, the linear estimation value is proportional to a frequency error. The phase variation occurs because a terminal has relatively inaccurate timing as compared to a base station. A reference signal of a frequency error control (FEC) loop for use in the UMTS system is a CPICH, and a complex plane of the CPICH reference symbol is shown in Fig. 2.

Fig. 2 is a complex plane of the CPICH reference symbol for use in the UMTS system.

An FDD (Frequency Difference Detector) is adapted to detect a frequency error using a reference signal in the reception end of the UMTS. There are two methods for detecting the frequency error, i.e., the first method uses an arc tangent, and the second uses a CPFDD (Cross Product Frequency Difference Detector). The CPFDD detects the frequency error by multiplying delayed I-channel and Q-channel values by an original value. The arc tangent method performs a normalization operation with a signal magnitude. The CPFDD method provides a frequency with a weighted value on the basis of a signal magnitude without the normalization operation. Since signal accuracy is degraded by noise in the case of a low signal magnitude, the CPFDD method for providing a weighted value accurately estimates a phase error as compared to the method using the arc tangent in the actual channel circumstances. However, the arc tangent method estimates a phase error more accurately than the CPFDD method in ideal channel circumstances.

For the purposes of calculations herein, let, $CPICH1_{prev} = R_1 + jI_1$, and $CPICH1_{current} = R_2 + jI_2$. A method for calculating a phase estimation value according to the arc tangent algorithm using the above complex number of a CPICH reference symbol can be represented by the following Equation 1. Also, a method for calculating the phase estimation value according to the CPFDD algorithm can be represented by the following Equation 2.

## [Equation 1]

$$\hat{\theta}_1 = \tan^{-1}\left(\frac{R_1 I_2 - R_2 I_1}{R_1 R_2 + I_1 I_2}\right)$$

[Equation 2]

$$\hat{\theta}_1 = \operatorname{Im}\{CPICH_{current} \cdot CPICH^*_{prev}\} = R_1 I_2 - R_2 I_1$$

The phase estimation errors calculated by Equations 1 and 2 are combined by a prescribed finger of the receiver, without any weighted values.

A representative example for operating the AFC system using the CPICH has been disclosed in United States Patent No. 6,510,187. The AFC system disclosed therein sets up and accumulates the CPICH symbol interval according to information indicative of the presence or absence of the Transmit Antenna Diversity scheme, and acquires the complex conjugate product of the accumulated output results, resulting in a value for measuring a phase error.

In order to increase downlink capacity in the UMTS, the UMTS can utilize beamforming technology for focusing a transmission/reception antenna beam specifically onto a corresponding terminal, and can simultaneously transmit a dedicated phase reference signal to allow each user to perform synchronous demodulation.

The UMTS can transmit individual channels, for example a DPCH (Dedicate Physical Channel), a DSCH (Downlink Shared Channel), and an HS-DSCH (High Speed Downlink Shared Channel), to a specific area of a cell by means of the aforementioned beamforming technology. In this case, an upper layer informs a mobile terminal or UE of the fact that a downlink phase reference is not the CPICH (Common Pilot Channel). Therefore, the UMTS must compensate for a frequency error using other channels other than the CPICH.

If the UE moves to a prescribed beamforming cell, the UE cannot use either a P-CPICH (Primary CPICH) or an S-CPICH (Secondary CPICH) in the upper layer on the basis of a phase, and the UMTS informs the UE of the fact that a downlink DPCH of a corresponding cell can be used as a phase reference. In this case, it is assumed that the UE does not use Transmit Diversity (STTD or TxAA). Therefore, the UE must compensate for a frequency error using a DPCH.

Many developers have recently conducted intensive research into a method for transmitting the DPCH using a beamforming antenna, but there exists no method for detecting and compensating for a frequency error.

Therefore, the present invention has been made in view of the above problems.

It is the object of the present invention to provide a frequency error detector and combiner when a phase reference of an UE downlink for use in an UMTS AFC system is not a CPICH.

This object is solved by the subject matter of the independent claims.

Preferred embodiments are defined in the dependent claims.

In accordance with the present invention, the above object and other aspects can be accomplished by providing a frequency error detector and combiner apparatus for use in a reception end of a mobile communication system which includes different frame formats according to slot formats, comprising: a frequency error detector for detecting a frequency error using a phase reference symbol of a predetermined channel received from a transmission end; a reference frequency error generator for generating a reference frequency error at intervals of a predetermined reference time using the detected frequency error; a level controller for controlling a frequency error generated from the reference frequency error generator to enter an appropriate level according to reception power intensity, and generating a level-controlled frequency error; and a frequency error combiner for combining a frequency error generated from each finger via the level controller with a predetermined value.

In accordance with another aspect of the present invention, a method corresponding to the above frequency error detector and combiner apparatus is provided.

The above features and other advantages of the present invention will be more clearly understood from the following detailed description taken in conjunction with the accompanying drawings, in which:

Fig. 1 is a diagram illustrating a modulation pattern of the common pilot channel (CPICH) for use in a mobile communication system;
Fig. 2 is a diagram illustrating complex plane of a CPICH reference symbol for use in the UMTS system;
Fig. 3 is a diagram illustrating a downlink DPCH frame structure for use in the U MTS system;
Fig. 4 is a diagram illustrating a TPC bit pattern for use in the downlink DPCH;
Fig. 5 is a block diagram illustrating an AFC (Automatic Frequency Control) system of an UE for use in the UMTS system in accordance with the present invention;
Fig. 6 is a block diagram illustrating a frequency error detector and a frequency error combiner in accordance with the present invention;
Fig. 7 is an exemplary table illustrating TPC and PILOT patterns associated with a downlink DPCCH based on a slot format for use in the UMTS system; and
Fig. 8 is a diagram illustrating a reference frequency error estimation operation in accordance with the present invention.

Now, preferred embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may obscure the subject matter of the present invention.

The present invention adapts a DPCCH (Dedicated Physical Control Channel) of the DPCH (Dedicated Physical Channel) as a phase reference. This can be accomplished because a PILOT field of the DPCCH is transmitted using a prescribed pattern determined by a variety of slot formats. The TPC (transmit power control) field used for power control always transmits the same bit in the same slot, such that the receiver can detect a frequency error using the TPC field and the PILOT field. The TPC field adds a weighted value to the detected frequency error according to the reception power intensity detected by a finger, and combines the weighted result with the frequency error. For example, if it is determined that a neighbor cell is to be a beamforming cell in a soft-handover environment, the DPCH transmits a signal increased by 6 dB compared to when the neighbor cell is not to be the beanforming cell. The DPCH adds a weighted value to the frequency error detected at the stronger signal, such that the receiver can improve a frequency error compensation performance.

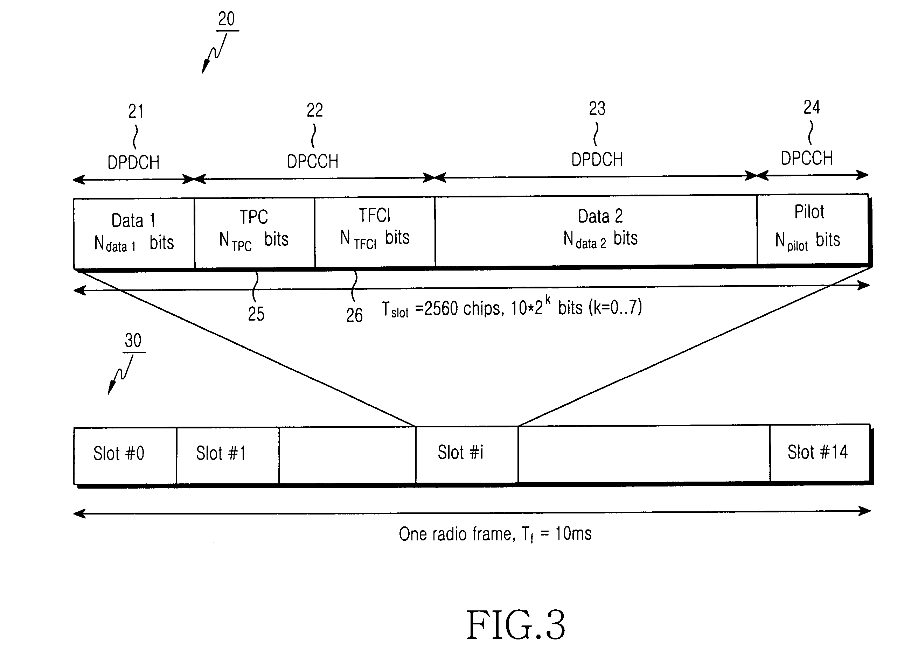

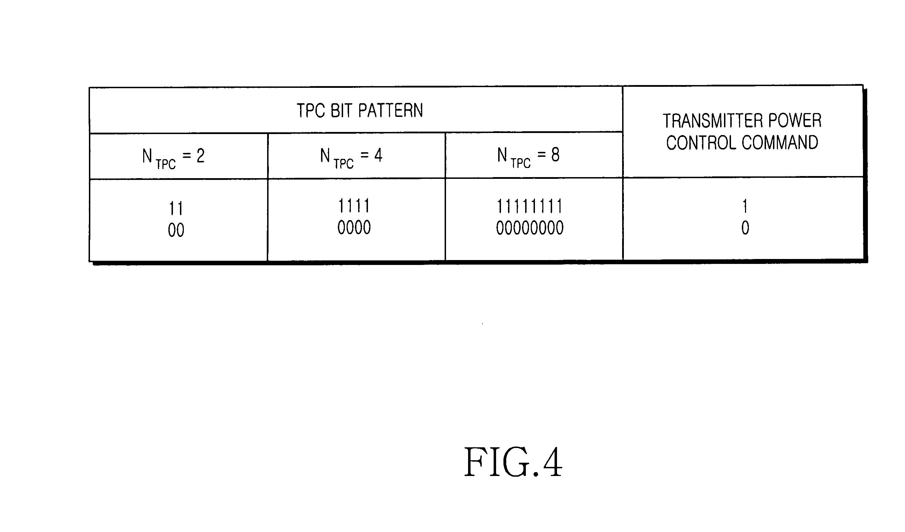

Fig. 3 is a diagram illustrating a downlink DPCH frame structure for use in the UMTS system. Fig. 4 is a diagram illustrating a TPC bit pattern for use in the downlink DPCH.

Referring to Fig. 3, the DPCH includes a DPDCH (Data1+Data2) for data transmission and a DPCCH (TPC+TCFI+PILOT) for a control signal. Upon receiving a DPCH signal, functioning as a phase reference instead of a CPICH signal, from the upper layer, the DPCCH (Dedicated Physical Control Channel) of the DPCH is adapted as a phase reference in the UE (User Equipment). The UE detects a frequency error using the TPC symbol 25 of the DPCCH 22 and the PILOT symbol 24 because the PILOT field of the DPCCH 22 is transmitted using a prescribed pattern determined by a variety of slot formats. The TPC field 25 used for power control transmits the same bit in the same slot, such that it can detect a frequency error using the TPC field and the PILOT field. The reason why the TPC field 25 can detect the frequency error using the TPC and PILOT fields is that the TPC symbol 24 and the PILOT symbol 24 each have a fixed bit pattern in the downlink DPCH. The bit pattern for the TPC symbol is shown in Fig. 4. Referring to Fig. 4, the TPC bit pattern assigns a predetermined value (e.g., "1") to each bit when a transmitter power control command is set to "1", and assigns the other value (e.g., "0") to each bit when a transmitter power control command is set to "0".

Each of the TPC symbol 25 and the PILOT symbol 24 not have a constant interval and a relatively short length as shown in Fig. 3. A receiver cannot detect a frequency error in the remaining intervals. The frequency error is detected only in the range of the short TPC and PILOT symbol intervals 25 and 24, and a previous frequency error must be included in the remaining intervals other than the TPC and PILOT symbol intervals. Otherwise, a detected frequency error is set to "0" in the same remaining intervals such that a current state of a frequency control loop must be maintained until detecting the next frequency error.

There are two problems in the aforementioned two cases. In the case of the first problem, provided that a frequency error detected during a short interval is maintained in the remaining intervals, a frequency compensation operation must be executed using a previous high detection error until the next detection error is received, even though the frequency detection error is substantially reduced. The magnitude of a residual frequency error is undesirably affected by the above frequency compensation operation. In the case of the second problem, a frequency detection operation is executed only during the short interval and no frequency compensation operation is executed during the remaining long intervals, resulting in a longer frequency stabilization time.

Therefore, there is a need for the frequency error compensation circuit to compensate for an approximate value even in an interval unable to detect the frequency error such that the frequency error compensation circuit can be operated at a constant speed.

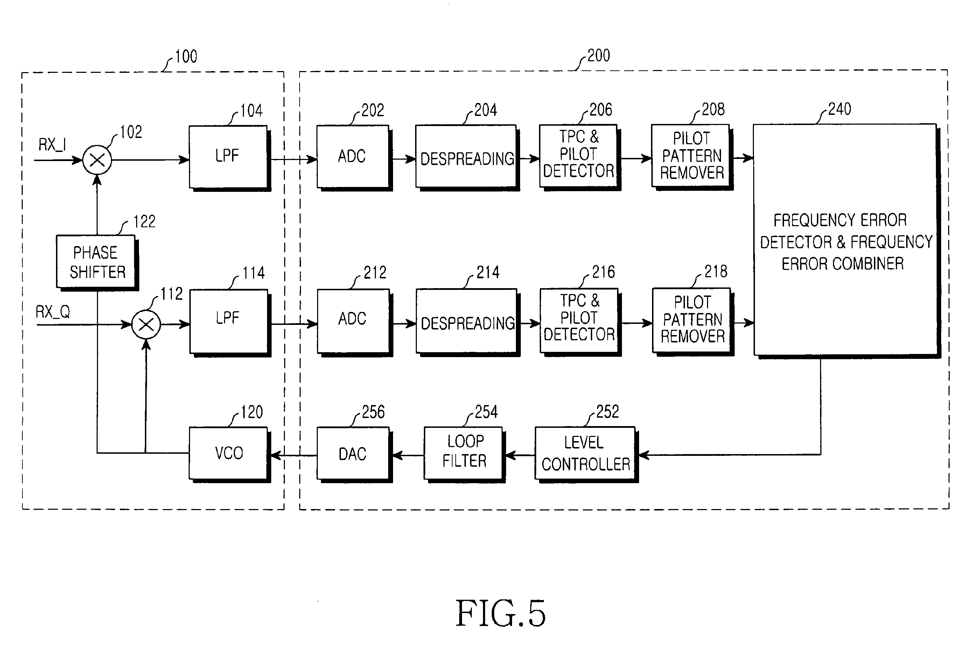

Fig. 5 is a block diagram illustrating an AFC (Automatic Frequency Control) system of a UE for use in the UMTS in accordance with an embodiment of the present invention.

Referring to Fig. 5, the AFC system includes an analog module 100 and a digital module 200. The analog module 100 includes mixers 102 and 112, a phase shifter 122, and LPFs (Low Pass Filters) 104 and 114. The analog module 100 includes a VCO (Voltage Controlled Oscillator) 120 for providing the mixers 102 and 112 with an oscillation frequency.

Referring to Fig. 5, mixer 102 multiplies an I signal received from a first antenna by an output signal of the VCO 120, and mixer 112 multiplies a Q signal received from a second antenna by the output signal of the VCO 120. The phase shifter 122 shifts a phase of the output signal of the VCO 120 by an angle of 90°, and outputs the phase-shifted signal to the mixers 102. The LPFs 104 and 114 filter out carrier frequency signals from the I and Q signals, respectively. The digital module 200 includes ADCs (Analog-to-Digital Converters) 202 and 212, despreading units 204 and 214, TPC and PILOT detectors 206 and 216, PILOT pattern removers 208 and 218, and a frequency error detector & frequency error combiner 240. The ADCs 202 and 212 convert output signals of the LPFs 104 and 114 into digital signals, and output the digital signals to the despreading units 204 and 214, respectively. The despreading units 204 and 214 dispread using the same spreading code that was used at the transmission end of a base station. The code is adapted to separate a specific channel from a variety of channels. The TPC and PILOT detectors 206 and 216 detect TPC and PILOT symbols from the output signals of the desperading units 204 and 214. The PILOT pattern removers 208 and 218 remove a pilot pattern from the output signals of the TPC and PILOT detectors 206 and 216. The frequency error detector & frequency error combiner 240 determine a frequency error on the basis of the TPC and PILOT symbols, and output the determined frequency error to a level controller 252. A loop filter 254 filters the frequency error transferred from the frequency error detector & frequency error combiner 240 to the level controller 252, and outputs the filtered frequency error. The DAC 256 converts a digital-type frequency error received from the loop filter 254 into an analog-type signal, and outputs the analog-type frequency error to the VCO 120.

Referring to Fig. 3, the UE for use in the beamforming cell uses the TPC and PILOT symbols 25 and 24 contained in the phase reference in the DPCCH of the DPCH. The TPC symbol 25 and the PILOT symbol 24 are not fixed to a constant interval, and are each fixed to a relatively short length, such that a frequency error acquired by the TPC and PILOT symbols 25 and 24 cannot be acquired at predetermined intervals. The present invention applies an interpolation or attenuation constant to a real frequency error acquired by the TPC and PILOT symbols 25 and 24, such that a receiver can calculate an estimated frequency error. The present invention calculates the real frequency error and the estimated frequency error at predetermined intervals. A prescribed period for calculating the frequency error is referred to herein as a reference time interval. The present invention estimates an approximate value of a frequency error even in the specific interval during which the frequency error cannot actually be detected, such that it can operate the frequency error compensation circuit at a prescribed speed.

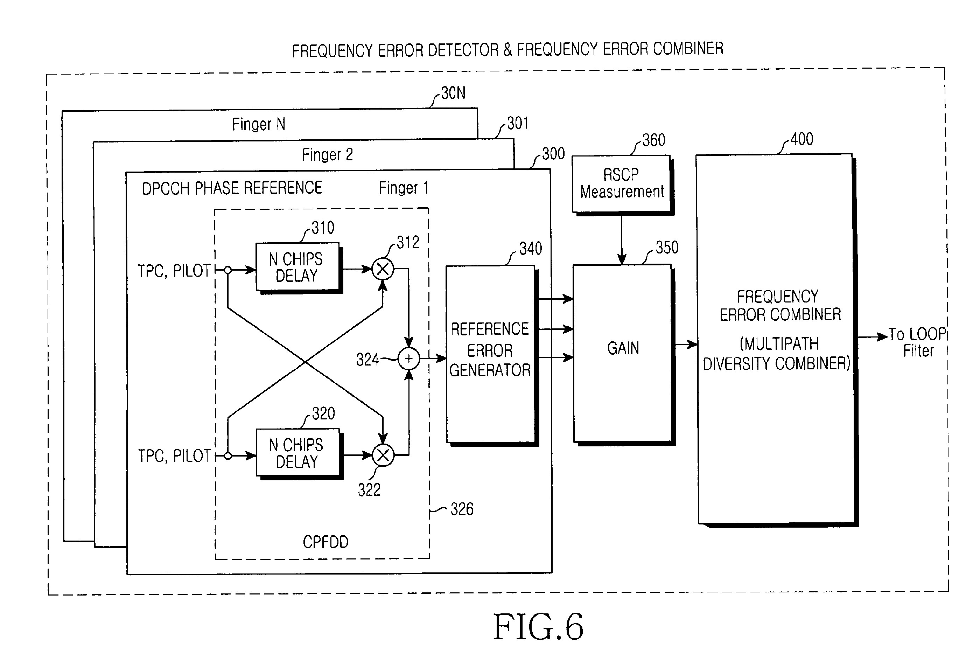

Fig. 6 is a block diagram illustrating a frequency error detector and a frequency error combiner in accordance with the present invention.

The frequency error detector & frequency error combiner shown in Fig. 6 does not use an STTD (Space Time Transmit Diversity) in the beamforming cell, and uses the DPCH as a reference phase, such that it can take an integer multiple of a spreading factor (SF) of the DPCH at intervals of a reference time. A Cross Product Frequency error Detector (CPFDD) entry interval is associated with a frequency error detection range of the CPFDD, such that the frequency error detector & frequency error combiner selects an appropriate reference time interval. The frequency error compensation loop is operated at intervals of the reference time.

If the reference time interval is set to a prescribed time of 512 chips, the frequency error detector & frequency error combiner can construct the same frequency error control loop as the conventional frequency error detector for use with a traditional CPICH. The conventional AFC block for adapting the traditional CPICH as a reference phase sets a signal entry interval of the CPFDD to a prescribed time of 512 chips. Provided that the frequency error detector & frequency error combiner does not use STTD, it takes an integer multiple of a CPICH's SF as a reference time interval, such that a receiver can construct the same frequency error control loop as the frequency error detector for use with the traditional CPICH. Therefore, the frequency error detector & frequency error combiner adds a weighted value to a detected frequency error according to reception power of a finger, and further includes only a frequency error combiner unit, such that the receiver can use the traditional structure by adding the frequency error combiner unit to the traditional structure.

Referring to Fig. 6, the frequency error detector & frequency error combiner receives the TPC and PILOT symbols from the TPC and PILOT symbol detectors 206 and 216 referring to Fig. 5. The frequency error detector & frequency error combiner includes a frequency difference detector (FDD) 326, a reference frequency error generator 340 for generating a reference frequency error at predetermined time intervals using a detected frequency difference, and a frequency error combiner 400 for applying a weighted value according to a power level of the finger to combine the weighted result with the frequency error. The CPFDD 326 and the reference frequency error generator 340 are included in each finger of individual paths contained in a multi-path. The frequency error combiner 400 is connected to each finger to perform frequency error combination, and outputs the frequency error combination result to the loop filter 214. The frequency error detector & frequency error combiner further includes a Received Signal Code Power (RSCP) measurement unit 360 for measuring the intensity of reception power received from the finger to provide the measured reception power intensity, and a level controller 350 (GAIN) for controlling the frequency error generated from the reference frequency error generator 340 to enter an appropriate level according to the reception power, and outputting the level-controlled frequency error to the frequency error combiner 400. The frequency error combiner 400 combines frequency errors generated from each of the fingers.

The CPFDD 326 acting as a frequency error detector includes first and second delays 310 and 320, first and second multipliers 312 and 322, and an adder 324. The first delay 310 delays first reception symbol data to generate delayed first reception symbol data, and the second delay 320 delays second reception symbol data to generate delayed second reception symbol data. The first multiplier 312 multiplies the delayed first reception symbol data received from the first delay 310 by undelayed second reception symbol data, and the second multiplier 322 multiplies the delayed second reception symbol data received from the second delay 320 by undelayed first reception symbol data. The adder 324 calculates a difference between the output values of the first and second multipliers 312 and 322, and outputs the difference as a frequency error value.

The reference frequency error generator 340 generates a reference frequency error at predetermined time intervals using the detected error. Upon receipt of a reference frequency error measured during a phase reference symbol interval of a previous slot, the reference frequency error generator 340 estimates and outputs a reference frequency error during a phase reference symbol interval through a method of using an interpolation or attenuation constant. In this case, the phase reference symbol can be the TPC symbol, the PILOT symbol, or both of them.

The level controller (denoted by GAIN in Fig. 6) 350 controls the reference frequency error generated from the reference frequency error generator 340 to provide a proper level according to reception power intensity provided from the RSCP measurement unit 360, and outputs the level-controlled reference frequency error to the frequency error combiner 400. The RSCP measurement unit 360 measures the intensity of reception power generated from individual fingers, and outputs the measured reception power intensity to the level controller 350. In this way, the RSCP measurement unit 360 adds a variably weighted value to the output frequency error of the finger according to the each finger reception power, such that the level controller 350 can generate a correct frequency error upon receipt of the output value of the RSCP measurement unit 360. The frequency error combiner 400 combines the frequency errors generated from the individual fingers, and outputs the combined frequency error to the loop filter 254. The frequency error combiner 400 combines the reference frequency errors received from the individual fingers to acquire diversity effect based on a multi-path.

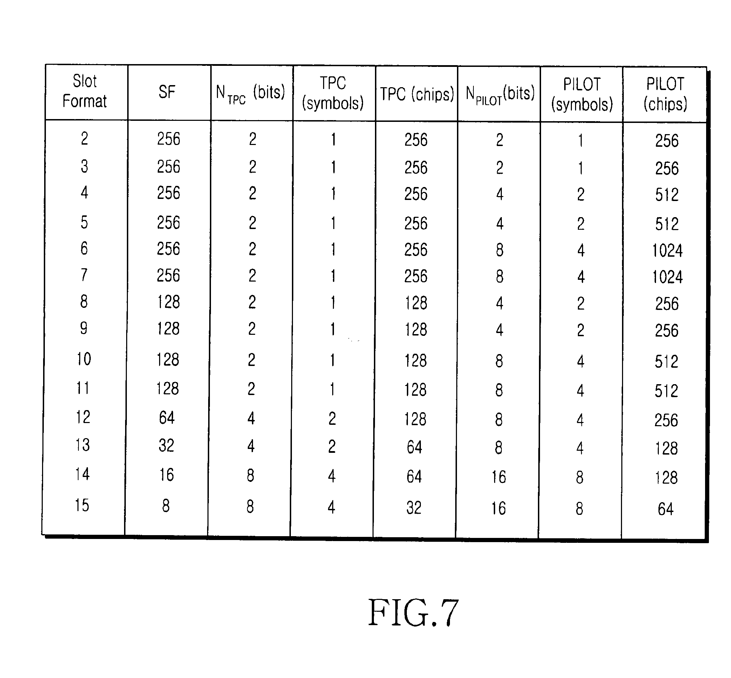

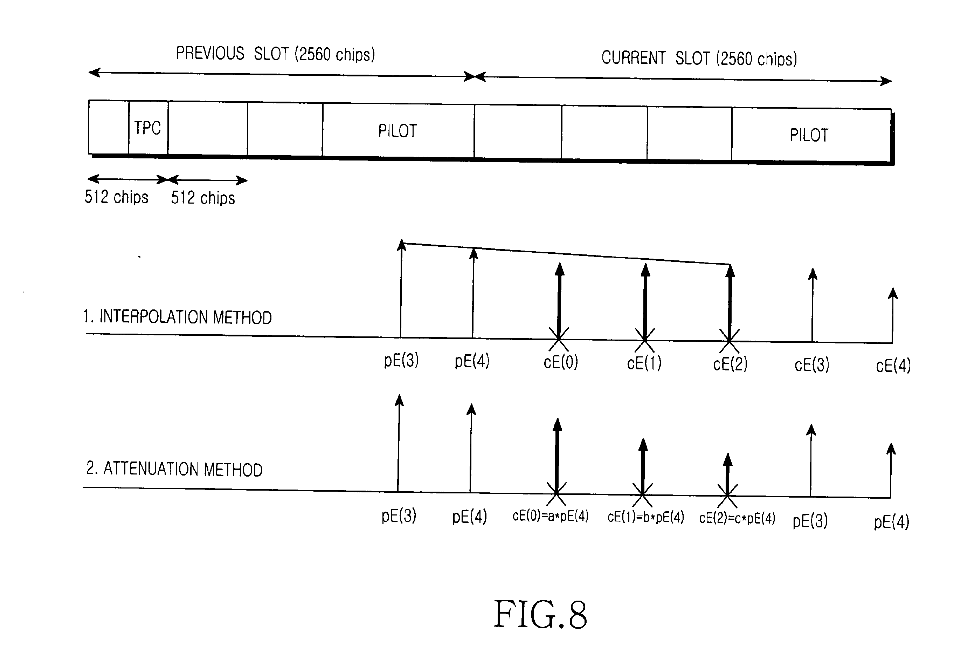

The reference frequency error generator 340 will now be described with reference to Figs. 7 and 8. Fig. 7 is an exemplary table illustrating TPC and PILOT patterns associated with a downlink DPCCH based on a slot format for use in the UMTS. Fig. 8 is a conceptual diagram illustrating a reference frequency error estimation operation in accordance with the present invention.

Referring to Fig. 7, the UMTS contains different frame formats according to a variety of slot formats. the frequency error detector & frequency error combiner is operated according to the slot formats. For example, provided that a reference time interval is set to a prescribed interval of 512 chips in the AFC block, the UMTS divides the TPC symbol interval in half to generate two reference TPC symbols, in all cases except where the TPC symbols is "1", and measures a reference frequency error on the basis of the two reference TPC symbols.

The DPCH frame structure shown in Fig. 8 shows the TPC field in the first 512 chips of a previous slot. Provided that the slot format as shown in FIG. 7 is set to a slot format of 12 to 15, the present invention measures the reference frequency error using two reference TPC symbols, since each TPC field contains at least two TPC symbols. If the slot format is set to 12, 13, 14 or 15, the CPFDD output value can be calculated after the lapse of a predetermined time corresponding to the first 512 chips. If the slot format is set to the remaining values other than 12to 15, the number of the TPC symbol is equal to "1", and the present invention cannot measure the reference frequency error. In this case, the present invention receives a reference frequency error measured during a phase reference symbol interval of a previous slot, and estimates a new reference frequency error during the TPC symbol interval using an interpolation or attenuation constant.

Referring back to Fig. 2, if the TPC field 25, the TFC1 field 26, and the Data2 field 23, contained in the slot which includes the DPDCH 21, the DPCCH 22, composed of TPC and TFC1 fields 25 and 26, the DPDCH 23, containing the DATA2 field, and the DPCCH 24, containing the PILOT field 24, are transmitted then the PILOT symbol 24 is also transmitted. In this case, the PILOT symbol interval 24 may include the range from 64 chips to 1024 chips according to slot formats, as shown in Fig. 7.

Referring to Fig. 7, if the slot format is equal to 6 or 7, the SF is equal to 256, the TPC field is equal to 256 chips, and the PILOT field is equal to 1024 chips. The TPC symbol is determined to be "1", and therefore it is impossible to measure the reference frequency error using the TPC symbol. The UMTS can then only use the PILOT symbol, and can measure the output signal of the CPFDD twice if the reference time interval is equal to 512 chips in the AFC block. If the reference time interval is equal to 512 chips in the AFC block, the length of the slot is equal to 2560 chips, such that the output signal of the CPFDD must be calculated five times. However, in the aforementioned case where the slot format is set to 6 or 7, the output signal of the CPFDD is calculated twice, therefore the output signal of the CPFDD must be estimated three times in order to achieve the five "calculations". In this case, the reference error generator 340 generates the reference frequency error at a predetermined time intervals of 512 chips, and outputs the generated reference frequency error to the frequency error combiner 400.

If the reference time interval is set to 256 chips, there is a need for a single slot to generate the CPFDD output signal ten times, such that the reference frequency error is measured four times in the PILOT symbol interval. The reference frequency error generator 340 must estimate a reference error. For this purpose, the reference frequency error generator 340 may use an interpolation method, or may multiply an attenuation constant by a previously-measured error in such a way that it can estimate the reference error.

Fig. 8 illustrates the case where the reference time interval is set to 512 chips and the PILOT symbol interval is set to 1024 chips. A current slot error (cE) is set to a phase error of a current slot and a previous slot error (pE) is set to a phase error of a previous slot. The measurable reference errors are cE(3) and cE(4), and a reference error to be estimated are cE(0), cE(1), and cE(2). If there is a reference frequency error measured in the TPC symbol interval, its phase error is determined to be a phase error generated during a prescribed time interval (i.e., the range from 32 chips to 256 chips) between TPC symbols, and the present invention must convert the phase error into a phase error generated during the reference time. Such a phase error is linearly proportional to time in a short time interval, such that the present invention can perform the phase errors conversion in consideration of a difference between the reference time and the real TPC symbol interval. In other words, the reference frequency error is equal to a measurement error generated during the same reference time.

Examples of the two estimation methods, i.e., an interpolation method and an attenuation constant use method, are also shown in Fig. 8.

The interpolation method is designed to estimate cE(0), cE(1), and cE(2) using pE(3) and pE(4) of previous slots, and may include several previous slots, or may use a weighted value according to a time difference between a current slot and the previous slots. Although the disclosure herein has only considered a previous single slot, and uses the simplest linear interpolation method, more than one previous slot can be used, and advanced interpolation methods are contemplated.

The method utilizing the attenuation constant assumes that a control loop runs in a predetermined direction for reducing the error. The system then multiplies the recently-measured error by a gain of less than 1 in such a way that it can perform the estimation operation. For example, the attenuation constant method can be represented by cE(0)=a*pE(4), cE(1)=b*pE(4), and cE(2)=c*pE(4), where a, b, and c are constants less than 1. These constants a, b and c can be determined by a prescribed simulation.

The reference frequency error generator 340 generates the reference frequency error at reference time intervals using the above-identified method, and combines the generated frequency error with a weighted value according to each finger's reception power, such that it can operate a frequency error control loop. If the PILOT symbol interval is less than the reference time, the reference frequency error generator 340 divides the PILOT symbol interval in half, resulting in the creation of two combination PILOT symbols. Thereafter, the reference frequency error generator 340 measures only one reference error in the last PILOT symbol interval. Then the reference frequency error generator 340 performs a calculation process for providing the measurement error detected during the reference time.

As stated above, the present invention can improve a frequency error compensation performance by combining the generated frequency error with a weighted value according to a finger's reception power. For example, provided that signals are received from all of first to third cells in a soft-handover environment and the second and third cells are both beamforming cells, the present invention combines a frequency error detected by the first cell's CPICH with a weighted value according to the finger's reception power, and combines the other frequency error detected by the second and third cells' DPCHs with a weighted value according to the finger's reception power. The beamforming cell transmits the DPCH power level increased by 6 dB compared to a non-beamforming cell, and then can make a determination as to whether or not to transmit the CPICH. Traditional cells have fixed the CPICH to a specific value of -10 dB, and have transmitted the fixed CPICH. The present invention then combines the finger's output frequency error with a weighted value according to the finger's reception power, resulting in increased accuracy of the detected frequency error. The inventive method can improve system performance when an ME (Mobile Equipment) moves from a cell boundary area to other areas at a high speed.

As apparent from the above description, the present invention detects a frequency error using the TPC and PILOT symbols when it is impossible for an AFC system to adapt a CPICH as a phase reference, and combines a frequency error variably detected by the finger's reception power with a weighted value, resulting in an improved performance of an overall frequency error compensation circuit.

Although the preferred embodiments of the present invention have been disclosed for illustrative purposes, those skilled in the art will appreciate that various modifications, additions and substitutions are possible, without departing from the scope of the invention as disclosed in the accompanying claims.

**Claims**

1. A frequency error detector and combiner apparatus having at least two fingers for use in a receiver of a mobile communication system, each finger comprising:

   a frequency error detector for detecting a frequency error using a phase reference symbol of a predetermined channel received from a transmitter;
   a reference frequency error generator for generating a reference frequency error at predetermined time intervals using the detected frequency error;
   a level controller for controlling the gain of a frequency error generated from the reference frequency error generator; and
   a frequency error combiner for combining the gain controlled frequency error generated from each finger with a predetermined value.

2. The apparatus as set forth in claim 1, wherein the predetermined channel is a dedicated physical control channel of a dedicated physical channel.

3. The apparatus as set forth in claim 2, wherein the phase reference symbol is at least one of a transmit power control and a PILOT symbol of the dedicated physical control channel.

4. The apparatus as set forth in claim 3, wherein the frequency error detector and combiner is installed in a receiver of a beamforming cell.

5. The apparatus as set forth in one of claims 1 to 4, further comprising:

   a reception power intensity measurement unit for measuring the reception power received from each finger, and outputting the measured reception power to the level controller.

6. The apparatus as set forth in one of claims 1 to 5, wherein the reference frequency error generator receives detected frequency errors from the frequency error detector, and generates an estimated frequency error by interpolating the detected frequency error.

7. The apparatus as set forth in one of claims 1 to 6, wherein the reference frequency error generator receives a detected frequency error from the frequency error detector, and generates an estimated frequency error by attenuating the detected frequency error.

8. A frequency error detection and combining method operating in an apparatus having at least two fingers for use in a receiver of a mobile communication system, wherein said frequency error detection and combining method comprises the steps of:

   detecting, by a frequency error detector, a frequency error using a phase reference symbol of a predetermined channel received from a transmitter;
   generating, by a reference frequency error generator, a reference frequency error at predetermined time intervals using the detected frequency error;
   controlling, by a level controller, the gain of a frequency error generated from the reference frequency error generator; and
   combining, by a frequency error combiner, the gain controlled frequency error generated from each finger with a predetermined value.

9. The method as set forth in claim 8, adapted to operate a frequency error detector and combiner apparatus according to one of claims 1 to 7.

EP 1 530 334 A2

Antenna 1 | A | A | A | A | A | A | A | A | A | A | A | A | A | A | A | A | A | A | A | A | A | A | A | A |

Antenna 2 | -A | -A | A | A | -A | -A | A | A | -A | A | -A | -A | A | A | -A | -A | A | A | -A | -A | A | A | -A | -A |

slot #14 | slot #0 | slot #1

Frame #i | Frame #i+1

Frame Boundary

FIG.1

FIG.2

20

| 21 | 22 | 23 | 24 |
| DPDCH | DPCCH | DPDCH | DPCCH |

| Data 1<br>$N_{data\ 1}$ bits | TPC<br>$N_{TPC}$ bits | TFCI<br>$N_{TFCI}$ bits | Data 2<br>$N_{data\ 2}$ bits | Pilot<br>$N_{pilot}$ bits |

25   26   $T_{slot}$ =2560 chips, $10*2^k$ bits (k=0..7)

30

| Slot #0 | Slot #1 | | Slot #i | | Slot #14 |

One radio frame, $T_f$ = 10ms

FIG.3

| TPC BIT PATTERN | | | TRANSMITTER POWER CONTROL COMMAND |
|---|---|---|---|
| $N_{TPC} = 2$ | $N_{TPC} = 4$ | $N_{TPC} = 8$ | |
| 11<br>00 | 1111<br>0000 | 11111111<br>00000000 | 1<br>0 |

FIG.4

EP 1 530 334 A2

FIG.5

EP 1 530 334 A2

FREQUENCY ERROR DETECTOR & FREQUENCY ERROR COMBINER

Finger N /30N

Finger 2 /301

/300

DPCCH PHASE REFERENCE          Finger 1

/310
N CHIPS DELAY

⊗ /312

TPC, PILOT

324 ⊕

REFERENCE ERROR GENERATOR /340

RSCP Measurement /360

GAIN /350

/320
N CHIPS DELAY

⊗ /322

TPC, PILOT

/326

CPFDD

FREQUENCY ERROR COMBINER (MULTIPATH DIVERSITY COMBINER) /400

To LOOP Filter

EP 1 530 334 A2

14

FIG.6

| Slot Format | SF | $N_{TPC}$ (bits) | TPC (symbols) | TPC (chips) | $N_{PILOT}$ (bits) | PILOT (symbols) | PILOT (chips) |
|---|---|---|---|---|---|---|---|
| 2 | 256 | 2 | 1 | 256 | 2 | 1 | 256 |
| 3 | 256 | 2 | 1 | 256 | 2 | 1 | 256 |
| 4 | 256 | 2 | 1 | 256 | 4 | 2 | 512 |
| 5 | 256 | 2 | 1 | 256 | 4 | 2 | 512 |
| 6 | 256 | 2 | 1 | 256 | 8 | 4 | 1024 |
| 7 | 256 | 2 | 1 | 256 | 8 | 4 | 1024 |
| 8 | 128 | 2 | 1 | 128 | 4 | 2 | 256 |
| 9 | 128 | 2 | 1 | 128 | 4 | 2 | 256 |
| 10 | 128 | 2 | 1 | 128 | 8 | 4 | 512 |
| 11 | 128 | 2 | 1 | 128 | 8 | 4 | 512 |
| 12 | 64 | 4 | 2 | 128 | 8 | 4 | 256 |
| 13 | 32 | 4 | 2 | 64 | 8 | 4 | 128 |
| 14 | 16 | 8 | 4 | 64 | 16 | 8 | 128 |
| 15 | 8 | 8 | 4 | 32 | 16 | 8 | 64 |

FIG.7

FIG.8